# EUROPEAN PATENT SPECIFICATION

(11) **EP 4 542 401 B1**
(45) Date of publication and mention of the grant of the patent: **03.09.2025**
(21) Application number: 24200844.9
(22) Date of filing: 17.09.2024
(51) Int. Cl.: G06F 13/40

(54) **DATA TRANSMISSION DEVICE, DATA TRANSFER SYSTEM AND DATA TRANSFER METHOD**
DATENÜBERTRAGUNGSVORRICHTUNG, DATENÜBERTRAGUNGSSYSTEM UND DATENÜBERTRAGUNGSVERFAHREN
DISPOSITIF DE TRANSMISSION DE DONNÉES, SYSTÈME DE TRANSFERT DE DONNÉES ET PROCÉDÉ DE TRANSFERT DE DONNÉES

(30) Priority: 20.10.2023 CN 202311365502
(43) Date of publication of application: 23.04.2025
(73) Proprietor: Getac Technology Corporation, New Taipei City 221009 (TW)
(72) Inventor: Tu, Yu Jen, Taipei City 11568, (R.O.C.) (TW)
(74) Representative: dompatent von Kreisler Selting Werner - Partnerschaft von Patent- und Rechtsanwälten mbB

(56) References cited:
- WO-A1-2023/164109
- US-A1- 2019 196 924
- US-A1- 2021 367 366

## Description

### BACKGROUND

### 1. Technical Field

This invention relates to a data transmission device, data transfer system and data transfer method.

### 2. Related Art

As a tool for data storage and data transmission, portable hard drives are commonly used. Users only need to insert the portable hard drive into their personal devices to store or transfer data to their personal devices. However, the data transmission described above requires human operation, making the process time-consuming and error-prone.

### SUMMARY

The subject matter of the invention is defined by each of independent claims 1 and 14. Embodiments of the invention are defined in the dependent claims.

Accordingly, this invention provides a data transmission and a data transfer method.

According to the invention, a data transmission device includes a reversible pluggable connection port, a memory and a processor. The reversible pluggable connection port includes a plurality of upper pins and a plurality of lower pins arranged oppositely, wherein the plurality of upper pins include a first identification pin, and the plurality of lower pins include a second identification pin. The processor is connected to the reversible pluggable connection port and the memory, and is configured to output data stored in the memory through the reversible pluggable connection port when detecting a specified signal through the first identification pin, and output a data restoration request signal through the reversible pluggable connection port when detecting the specified signal through the second identification pin.

According to an embodiment of the invention, a data transfer system includes a portable hard drive and a data transmission device. The data transmission device includes a reversible pluggable connection port, a memory and a processor. The reversible pluggable connection port is configured to be connected to the portable hard drive and includes a plurality of upper pins and a plurality of lower pins arranged oppositely, wherein the plurality of upper pins include a first identification pin, and the plurality of lower pins include a second identification pin. The processor is connected to the reversible pluggable connection port and the memory, and is configured to output data stored in the memory to the portable hard drive through the reversible pluggable connection port when detecting a specified signal through the first identification pin, and output a data restoration request signal to the portable hard drive through the reversible pluggable connection port when detecting the specified signal through the second identification pin.

According to the invention, a data transfer method is applicable to a portable hard drive and a data transmission device. The data transfer method includes using the data transmission device to execute: outputting stored data to the portable hard drive through a reversible pluggable connection port when detecting a specified signal through a first identification pin of a plurality of upper pins of the reversible pluggable connection port, and outputting a data restoration request signal to the portable hard drive through the reversible pluggable connection port when detecting the specified signal through a second identification pin of a plurality of lower pins of the reversible pluggable connection port.

In view of the above description, the data transmission device, data transfer system and data transfer method perform the first function of data output or data restoration when the data transmission device detects a specified signal through the first identification pin (i.e., detects that the portable hard drive is inserted with the first side) by disposing an identification pin on the upper pins and the lower pins of the reversible pluggable connection port respectively; and perform the second function of retrieving data or data backup when the data transmission device detects the specified signal through the second identification pin (i.e., detects that the portable hard drive is inserted with the second side). In this way, additional operations required for data transfer can be reduced to optimize the process and efficiency of data transfer for saving time.

### BRIEF DESCRIPTION OF THE DRAWINGS

The present invention will become more fully understood from the detailed description given hereinbelow and the accompanying drawings which are given by way of illustration only and thus are not limitative of the present invention and wherein:
FIG. 1 is a block diagram of a data transmission device according to an embodiment of the present invention;
FIG. 2 is a block diagram of a data transfer system according to an embodiment of the present invention;
FIG. 3 is a schematic diagram of a reversible pluggable connection port of a data transmission device according to an embodiment of the present invention; and
FIG. 4 is a flow chart of a data transmission method according to an embodiment of the present invention.

### DETAILED DESCRIPTION

In the following detailed description, for purposes of explanation, numerous specific details are set forth in order to provide a thorough understanding of the disclosed embodiments. According to the description, claims and the drawings disclosed in the specification, one skilled in the art may easily understand the concepts and features of the present invention.

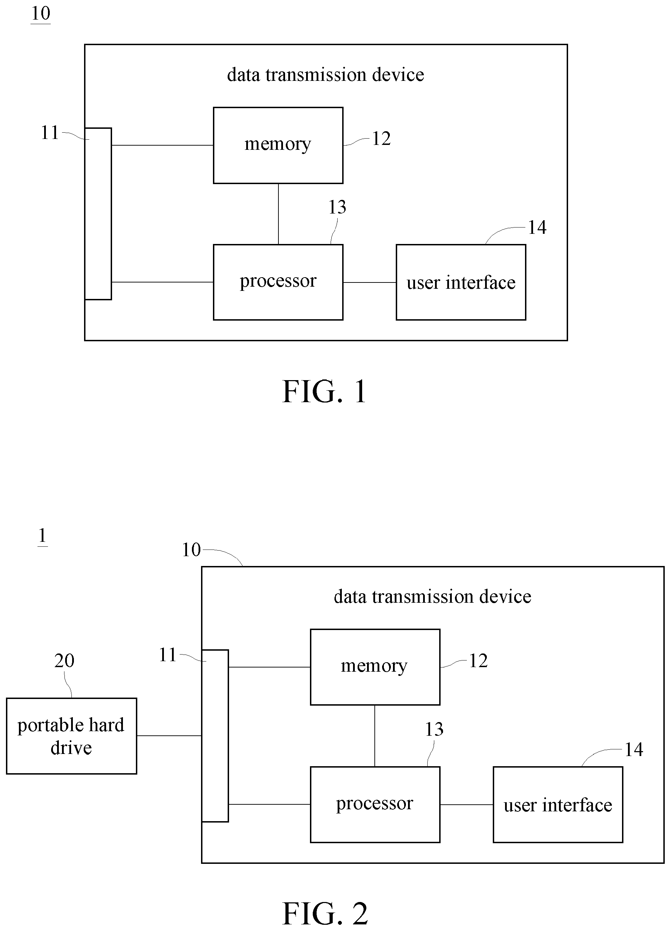

Please refer to FIG. 1 which is a block diagram of a data transmission device according to an embodiment of the present invention. As shown in FIG. 1, a data transmission device 10 includes a reversible pluggable connection port 11, a memory 12 and a processor 13. The reversible pluggable connection port 11 includes a plurality of upper pins and a plurality of lower pins arranged oppositely, wherein the plurality of upper pins include a first identification pin, and the plurality of lower pins include a second identification pin. The processor 13 is connected to the reversible pluggable connection port 11 and the memory 12, and is configured to output data stored in the memory 12 through the reversible pluggable connection port 11 when detecting a specified signal through the first identification pin, and output a data request signal through the reversible pluggable connection port 11 when detecting the specified signal through the second identification pin.

In the present embodiment, the data transmission device 10 may be a personal computer. The reversible pluggable connection port 11 includes a plurality of pins, some of the pins are used for transmitting and receiving data, and the other pins are used for identifying connected external devices. The multiple pin positions of the reversible pluggable connection port 11 is divided into upper pin positions and lower pin positions. The reversible pluggable connection port 11 may be connected to the front or back side of a connector. That is, the upper pins or the lower pins of the reversible pluggable connection port 11 may be connected to a connector. For example, the reversible pluggable connection port 11 may be a USB Type-C port, but the present invention is not limited thereto. The memory 12 may be a non-volatile memory, such as a read-only memory. The processor may be a microcontroller, a central processing unit, a programmable logic controller, etc.

When an external device is connected to the data transmission device 10 through the reversible pluggable connection port 11, the processor 13 may determine whether the external device is connected to the reversible pluggable connection port 11 through the front side or the back side. Specifically, the processor 13 outputs data stored in the memory 12 through the reversible pluggable connection port 11 when detecting a specified signal through the first identification pin (that is, detecting that an external device is plugged in with the front side). The processor 13 outputs a data restoration request signal through the reversible pluggable connection port 11 when detecting the specified signal through the second identification pin (that is, detecting that the external device is plugged in with the back side). In other words, the data in the memory 12 may be transferred from the external device or the data in the memory 12 may be backed up to the external device when the processor 13 detects the specified signal through the first identification pin. The processor 13 may send a data request signal to the external device or allow the external data of the external device to be restored into the memory 12 of the data transmission device 10 when the processor 13 detects the specified signal through the second identification pin.

In addition, as shown in FIG. 1, the data transmission device 10 of the present embodiment may further include a user interface 14 connected to the processor 13, wherein the processor 13 may be further configured to send a confirmation message through the user interface 14 when a specified signal is detected through the first identification pin or the second identification pin. In the present embodiment, the user interface 14 may be a screen. Specifically, when the user inserts one side of the external device into the reversible pluggable connection port 11, the processor 13 may send a confirmation message through the user interface 14 based on a specified signal detected by the first identification pin or the second identification pin to ensure that the user may perform a desired function. Further, when the user inserts the external device (such as a portable hard drive) into the data transmission device 10 with the backup side, the user may choose to back up all data or only choose to back up specific data to the portable hard drive through setting options of the user interface 14. At the same time, the user interface 14 may also provide the option of restoring the original factory settings, so that the user may restore the data transmission device to the original system state while selecting the backup.

Please refer to FIG. 2 which is a block diagram of a data transfer system according to an embodiment of the present invention. As shown in FIG. 2, a data transfer system 1 includes a portable hard drive 20 and a data transmission device 10. The data transmission device 10 includes a reversible pluggable connection port 11, a memory 12 and a processor 13. The reversible pluggable connection port 11 is configured to be connected to the portable hard drive 20 and includes a plurality of upper pins and a plurality of lower pins arranged oppositely, wherein the plurality of upper pins include a first identification pin, and the plurality of lower pins include a second identification pin. The processor 13 is connected to the reversible pluggable connection port 11 and the memory 12, and is configured to output data stored in the memory 12 to the portable hard drive 20 through the reversible pluggable connection port 11 when detecting a specified signal through the first identification pin, and output a data request signal to the portable hard drive 20 through the reversible pluggable connection port 11 when detecting the specified signal through the second identification pin.

The data transmission device 10 in FIG. 2 is basically the same as the data transmission device 10 in FIG. 1 and is not described repeatedly herein. In the present embodiment, the portable hard drive 20 has a connector corresponding to the reversible pluggable connection port 11, specifically a Universal Serial Bus (USB) Type-C connector. When the portable hard drive 20 is connected to the data transmission device 10 through the reversible pluggable connection port 11, the processor 13 may determine whether the portable hard drive 20 is connected to the reversible pluggable connection port 11 through the front or back side. Specifically, the processor 13 outputs data stored in the memory 12 to the portable hard drive 20 through the reversible pluggable connection port 11 when detecting a specified signal through the first identification pin (that is, detecting that the portable hard drive 20 is plugged in with the front side).The processor 13 outputs a data restoration request signal to the portable hard drive 20 through the reversible pluggable connection port 11 when detecting the specified signal through the second identification pin (that is, detecting that the portable hard drive 20 is plugged in with the back side).

That is, the data in the memory 12 may be transferred from the portable hard drive 20 or the data in the memory 12 may be backed up to the portable hard drive 20 when the processor 13 detects the specified signal through the first identification pin. The processor 13 may send a data request signal to the portable hard drive 20 or allow the external data of the portable hard drive 20 to be restored into the memory 12 of the data transmission device 10 when the processor 13 detects the specified signal through the second identification pin. In this way, when the portable hard drive 20 is coupled to the data transmission device 10 with the front side, the data of the data transmission device 10 may be backed up; when the portable hard drive 20 is coupled to the data transmission device 10 with the back side, the backed up or stored data may be restored to the data transmission device 10. The portable hard drive 20 may also be used to restore factory settings of multiple data transmission devices 10. In one embodiment, different patterns may be provided on two opposite surfaces of the portable hard drive 20 for user identification.

In addition, as shown in FIG. 2, the data transmission device 10 of the present embodiment may further include a user interface 14 connected to the processor 13, wherein the processor 13 may be further configured to send a confirmation message through the user interface 14 when a specified signal is detected through the first identification pin or the second identification pin. In the present embodiment, the user interface 14 may be a screen. Specifically, when the user inserts one side of the portable hard drive 20 into the reversible pluggable connection port 11, the processor 13 may send a confirmation message through the user interface 14 based on a specified signal detected by the first identification pin or the second identification pin to ensure that the user may perform a desired function.

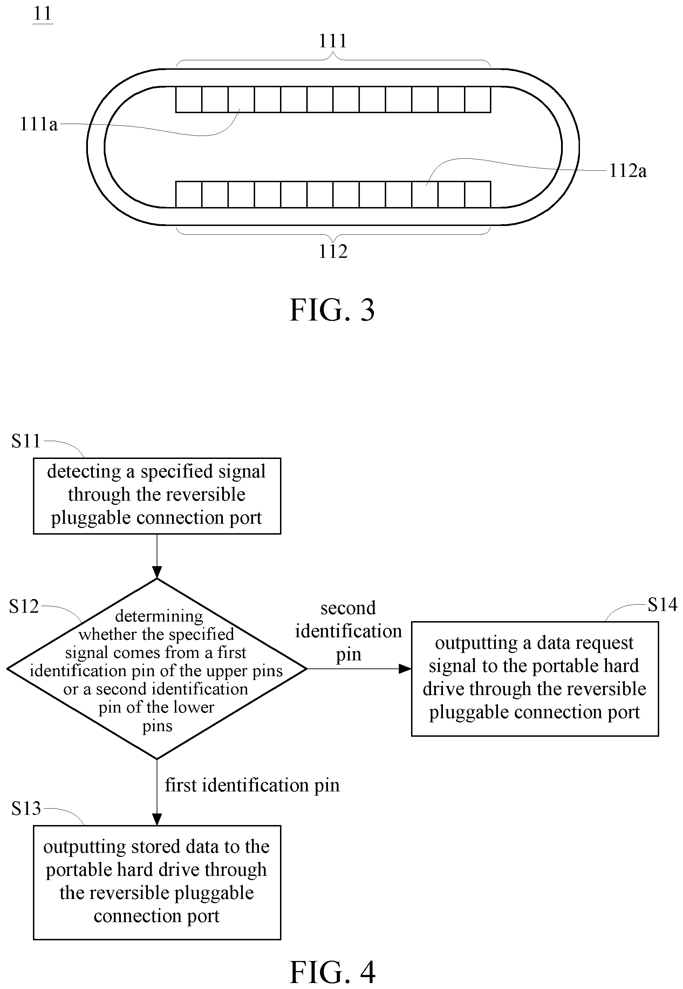

Please refer to FIG. 3 which is a schematic diagram of a reversible pluggable connection port of a data transmission device according to an embodiment of the present invention . As shown in FIG. 3, the first identification pin 111a of the reversible pluggable connection port 11 is disposed at a specific sequence from left to right of the plurality of upper pins 111, and the second identification pin 112a is disposed at the specific sequence from right to left of the plurality of lower pins 112. Through this configuration, when the connector of the portable hard drive is connected to the reversible pluggable connection port 11 with the front side, the data transmission device detects the specified signal through the first identification pin 111a; and when the connector of the portable hard drive is connected to the reversible pluggable connection port 11 with the back side, the data transmission device detects the specified signal through the second identification pin 112a.

Please refer to FIG. 4 along with FIG. 2, FIG. 4 is a flow chart of a data transmission method according to an embodiment of the present invention. As shown in FIG. 4, a data transfer method includes using the data transmission device 10 and the portable hard drive 20 to execute step S11: detecting a specified signal through the reversible pluggable connection port; step S12: determining whether the specified signal comes from the first identification pin of the upper pins or the second identification pin of the lower pins; if the specified signal comes from the first identification pin, executing step S13: outputting stored data to the portable hard drive through the reversible pluggable connection port; if the specified signal comes from the second identification pin, executing step S14: outputting a data request signal to the portable hard drive through the reversible pluggable connection port.

The execution of the above steps S11 to S14 is basically the same as the description of FIGS. 1 to 3 and is not described repeatedly herein. In addition, the data transfer method described above may further include: sending a confirmation message through the user interface when detecting the specified signal through the first identification pin or the second identification pin. Specifically, the user interface may be a screen. When the user inserts one side of the portable hard drive into the reversible pluggable connection port, the processor may send a confirmation message through the user interface based on the specified signal detected by the first identification pin or the second identification pin.

Based on the embodiments of the data transmission device, data transfer system and data transfer method described above, optional implementation are provided below. In one embodiment, the processor of the data transmission device may be further configured to receive verification information through the reversible pluggable connection port and confirm that the verification information matches pre-stored information before outputting the data stored in the memory or the data request signal. That is, before steps S13 and S14 in FIG. 4, the processor of the data transmission device may first verify the verification information of the portable hard drive (or external device). Through this verification mechanism, the data transmission device in the present embodiment may not only easily backup data to a portable hard drive or restore data from a portable hard drive, but also improve data security. Specifically, when an arbitrary and non-matching portable hard drive is inserted into the data transmission device, the data transmission device may first verify the portable hard drive to avoid backing up important data to other suspicious flash drives, and to avoid backing up important data to other suspicious portable hard drives, and also avoid obtaining harmful data, such as virus codes, etc. from suspicious portable hard drives.

In another embodiment, the processor of the data transmission device may be further configured to receive a driving program from the portable hard drive (or external device) through the reversible pluggable connection port and install the driving program. Further, the processor of the data transmission device may be configured to activate the driving program when the specified signal is detected through the first identification pin or the second identification pin. The processor may output data stored in the memory or the data request signal through the reversible pluggable connection port after activating the driving program. Specifically, the portable hard drive 20 in FIG. 2 may store a driving program in advance. When the portable hard drive 20 is connected to the reversible pluggable connection port **11** of the data transmission device 10, the processor 13 of the data transmission device 10 may install the driving program to obtain software resources, and activate the driving program and the specific operating interface to perform data backup or data restoration functions.

**In** view of the above description, the data transmission device, data transfer system and data transfer method may perform the first function of data output or data restoration when the data transmission device detects a specified signal through the first identification pin (i.e., detects that the portable hard drive is inserted with the first side) by disposing an identification pin on the upper pins and the lower pins of the reversible pluggable connection port respectively; and may perform the second function of retrieving data or data backup when the data transmission device detects the specified signal through the second identification pin (i.e., detects that the portable hard drive is inserted with the second side). In this way, additional operations required for data transfer can be reduced to optimize the process and efficiency of data transfer for saving time. In addition, by pre-saving the driving program in the portable hard drive, the data transmission device automatically installs the driving program and starts the software supporting system to perform subsequent data restoration or data backup when the portable hard drive is connected to the data transmission device, which is convenient for users to operate.

## Claims

1. A data transmission device (10), comprising:
a reversible pluggable connection port (11) comprising a plurality of upper pins (111) and a plurality of lower pins (112) arranged oppositely, wherein the plurality of upper pins (111) comprise a first identification pin (111a), and the plurality of lower pins (112) comprise a second identification pin (112a);
a memory (12); and
a processor (13) connected to the reversible pluggable connection port (11) and the memory (12), and **characterised in that** the processor (13) is configured to output data stored in the memory (12) through the reversible pluggable connection port (11) when detecting a specified signal through the first identification pin (111a), and output a data restoration request signal through the reversible pluggable connection port (11) when detecting the specified signal through the second identification pin (112a).

2. The data transmission device (10) of claim 1, wherein the first identification pin (111a) is disposed at a specific sequence from left to right of the plurality of upper pins (111), and the second identification pin (112a) is disposed at the specific sequence from right to left of the plurality of lower pins (112).

3. The data transmission device (10) of claim 1, wherein the processor (13) is further configured to receive verification information through the reversible pluggable connection port (11) and confirm that the verification information matches pre-stored information before outputting the data stored in the memory (12) or the data restoration request signal.

4. The data transmission device (10) of claim 1, wherein the processor (13) is further configured to receive a driving program through the reversible pluggable connection port (11) and install the driving program.

5. The data transmission device (10) of claim 4, wherein the processor (13) is configured to activate the driving program when detecting the specified signal through the first identification pin (111a) or the second identification pin (112a), and output the data stored in the memory (12) or the data restoration request signal through the reversible pluggable connection port (11) after activating the driving program.

6. The data transmission device (10) of claim 1, further comprising a user interface (14) connected to the processor (13), wherein the processor (13) is further configured to send a confirmation message through the user interface (14) when detecting the specified signal through the first identification pin (111a) or the second identification pin (112a).

7. A data transfer system (1), comprises:
a portable hard drive (20); and
the data transmission device (10) of claim 1, wherein the
reversible pluggable connection port (11) is configured to be connected to the portable hard drive (20),the processor (13) is configured to output the data stored in the memory (12) to the portable hard drive (20) when detecting the specified signal of the portable hard drive (20) through the first identification pin (111a), and output the data restoration request signal to the portable hard drive (20) when detecting the specified signal through the second identification pin (112a).

8. The data transfer system (1) of claim 7, wherein the portable hard drive (20) has a front side and a back side, and is configured to back up data of a first device when connected to the first device with the front side, and restore the data that is backed up to a second device when connected to the second device with the back side, wherein the first device and the second device are the data transmission device (10).

9. The data transfer system (1) of claim 7, wherein the first identification pin (111a) is disposed at a specific sequence from left to right of the plurality of upper pins (111), and the second identification pin (112a) is disposed at the specific sequence from right to left of the plurality of lower pins (112).

10. The data transfer system (1) of claim 7, wherein the processor (13) is further configured to receive verification information through the reversible pluggable connection port (11) and confirm that the verification information matches pre-stored information before outputting the data stored in the memory (12) or the data restoration request signal.

11. The data transfer system (1) of claim 7, wherein the processor (13) is further configured to receive a driving program through the reversible pluggable connection port (11) and install the driving program.

12. The data transfer system (1) of claim 11, wherein the processor (13) is configured to activate the driving program when detecting the specified signal through the first identification pin (111a) or the second identification pin (112a), and output the data stored in the memory (12) or the data restoration request signal through the reversible pluggable connection port (11) after activating the driving program.

13. The data transfer system (1) of claim 7, wherein the data transmission device (10) further comprises a user interface (14) connected to the processor (13), wherein the processor (13) is further configured to send a confirmation message through the user interface (14) when detecting the specified signal through the first identification pin (111a) or the second identification pin (112a).

14. A data transfer method, applicable to a portable hard drive (20) and a data transmission device (10), the data transfer method **characterised by** using the data transmission device (10) to execute:
outputting stored data to the portable hard drive (20) through a reversible pluggable connection port (11) when detecting a specified signal through a first identification pin (111a) of a plurality of upper pins of the reversible pluggable connection port (11); and
outputting a data restoration request signal to the portable hard drive (20) through the reversible pluggable connection port (11) when detecting the specified signal through a second identification pin (112a) of a plurality of lower pins (112) of the reversible pluggable connection port (11).

15. The data transfer method of claim 14, further comprising:
receiving verification information through the reversible pluggable connection port (11); and
confirming the verification information matches pre-stored information before outputting the stored data or the data restoration request signal.

## Patentansprüche

1. Datenübertragungsvorrichtung (10), die aufweist:
einen reversiblen steckbaren Verbindunganschluss (11), der eine Vielzahl von oberen Stiften (111) und eine Vielzahl von unteren Stiften (112) aufweist, die entgegengesetzt zueinander angeordnet sind, wobei die Vielzahl von oberen Stiften (111) einen ersten Identifikationsstift (111a) aufweist und die Vielzahl von unteren Stiften (112) einen zweite Identifikationsstift (112a) aufweist;
einen Speicher (12); und
einen Prozessor (13), der mit dem reversiblen steckbaren Verbindunganschluss (11) und dem Speicher (12) verbunden ist, und **dadurch gekennzeichnet, dass** der Prozessor (13) dazu ausgebildet ist, in dem Speicher (12) gespeicherte Daten über den reversiblen steckbaren Verbindunganschluss (11) auszugeben, wenn ein spezifiziertes Signal über den ersten Identifikationsstift (111a) erfasst wird, und ein Datenwiederherstellungsanforderungssignal über den reversiblen steckbaren Verbindunganschluss (11) auszugeben, wenn das spezifizierte Signal über den zweiten Identifikationsstift (112a) erfasst wird.

2. Datenübertragungsvorrichtung (10) nach Anspruch 1, wobei der erste Identifikationsstift (111a) in einer bestimmten Reihenfolge von links nach rechts der Vielzahl von oberen Stiften (111) angeordnet ist, und wobei der zweite Identifikationsstift (112a) in der bestimmten Reihenfolge von rechts nach links der Vielzahl von unteren Stiften (112) angeordnet ist.

3. Datenübertragungsvorrichtung (10) nach Anspruch 1, wobei der Prozessor (13) ferner dazu ausgebildet ist, Verifizierungsinformationen über den reversiblen steckbaren Verbindunganschluss (11) zu empfangen und zu bestätigen, dass die Verifizierungsinformationen mit den vorgespeicherten Informationen übereinstimmen, vor der Ausgabe der in dem Speicher (12) gespeicherten Daten oder des Datenwiederherstellungsanforderungssignals.

4. Datenübertragungsvorrichtung (10) nach Anspruch 1, wobei der Prozessor (13) ferner dazu ausgebildet ist, ein Treiberprogramm über den reversiblen steckbaren Verbindunganschluss (11) zu empfangen und das Treiberprogramm zu installieren.

5. Datenübertragungsvorrichtung (10) nach Anspruch 4, wobei der Prozessor (13) dazu ausgebildet ist, das Treiberprogramm zu aktivieren, wenn das spezifizierte Signal über den ersten Identifikationsstift (111a) oder den zweiten Identifikationsstift (112a) erfasst wird, und die in dem Speicher (12) gespeicherten Daten oder das Datenwiederherstellungsanforderungssignal über den reversiblen steckbaren Verbindunganschluss (11) nach Aktivierung des Treiberprogramms auszugeben.

6. Datenübertragungsvorrichtung (10) nach Anspruch 1, die ferner eine Benutzerschnittstelle (14) aufweist, die mit dem Prozessor (13) verbunden ist, wobei der Prozessor (13) ferner dazu ausgebildet ist, eine Bestätigungsnachricht über die Benutzerschnittstelle (14) zu senden, wenn das spezifizierte Signal über den ersten Identifikationsstift (111a) oder den zweiten Identifikationsstift (112a) erfasst wird.

7. Datenübertragungssystem (1), das aufweist:
eine portable Festplatte (20); und
die Datenübertragungsvorrichtung (10) nach Anspruch 1, wobei der reversible steckbare Verbindunganschluss (11) dazu ausgebildet ist, mit der portablen Festplatte (20) verbunden zu werden, wobei der Prozessor (13) dazu ausgebildet ist, die in dem Speicher (12) gespeicherten Daten an die portable Festplatte (20) auszugeben, wenn das spezifizierte Signal der portablen Festplatte (20) über den ersten Identifikationsstift (111a) erfasst wird, und das Datenwiederherstellungsanforderungssignal an die portable Festplatte (20) auszugeben, wenn das spezifizierte Signal über den zweiten Identifikationsstift (112a) erfasst wird.

8. Datenübertragungssystem (1) nach Anspruch 7, wobei die portable Festplatte (20) eine Vorderseite und eine Rückseite aufweist und dazu ausgebildet ist, Daten einer ersten Vorrichtung zu sichern, wenn sie mit der ersten Vorrichtung mit der Vorderseite verbunden ist, und die gesicherten Daten auf einer zweiten Vorrichtung wiederherzustellen, wenn sie mit der zweiten Vorrichtung mit der Rückseite verbunden ist, wobei die erste Vorrichtung und die zweite Vorrichtung die Datenübertragungsvorrichtung (10) sind.

9. Datenübertragungssystem (1) nach Anspruch 7, wobei der erste Identifikationsstift (111a) in einer bestimmten Reihenfolge von links nach rechts der Vielzahl von oberen Stiften (111) angeordnet ist, und wobei der zweite Identifikationsstift (112a) in der bestimmten Reihenfolge von rechts nach links der Vielzahl von unteren Stiften (112) angeordnet ist.

10. Datenübertragungssystem (1) nach Anspruch 7, wobei der Prozessor (13) ferner dazu ausgebildet ist, Verifizierungsinformationen über den reversiblen steckbaren Verbindunganschluss (11) zu empfangen und zu bestätigen, dass die Verifizierungsinformationen mit den vorgespeicherten Informationen übereinstimmen, vor der Ausgabe der in dem Speicher (12) gespeicherten Daten oder des Datenwiederherstellungsanforderungssignals.

11. Datenübertragungssystem (1) nach Anspruch 7, wobei der Prozessor (13) ferner dazu ausgebildet ist, ein Treiberprogramm über den reversiblen steckbaren Verbindunganschluss (11) zu empfangen und das Treiberprogramm zu installieren.

12. Datenübertragungssystem (1) nach Anspruch 11, wobei der Prozessor (13) dazu ausgebildet ist, das Treiberprogramm zu aktivieren, wenn das spezifizierte Signal über den ersten Identifikationsstift (111a) oder den zweiten Identifikationsstift (112a) erfasst wird, und die in dem Speicher (12) gespeicherten Daten oder das Datenwiederherstellungsanforderungssignal über den reversiblen steckbaren Verbindunganschluss (11) nach Aktivierung des Treiberprogramms auszugeben.

13. Datenübertragungssystem (1) nach Anspruch 7, wobei die Datenübertragungsvorrichtung (10) ferner eine Benutzerschnittstelle (14) aufweist, die mit dem Prozessor (13) verbunden ist, wobei der Prozessor (13) ferner dazu ausgebildet ist, eine Bestätigungsnachricht über die Benutzerschnittstelle (14) zu senden, wenn das spezifizierte Signal über den ersten Identifikationsstift (111a) oder den zweiten Identifikationsstift (112a) erfasst wird.

14. Datenübertragungsverfahren, das bei einer portablen Festplatte (20) und einer Datenübertragungsvorrichtung (10) anwendbar ist, wobei das Datenübertragungsverfahren **dadurch gekennzeichnet ist, dass** es die Datenübertragungsvorrichtung (10) verwendet, um Folgendes auszuführen:
Ausgeben der gespeicherten Daten an die portable Festplatte (20) über den reversiblen steckbaren Verbindunganschluss (11), wenn ein spezifiziertes Signal über einen ersten Identifikationsstift (111a) einer Vielzahl von oberen Stiften des reversiblen steckbaren Verbindunganschlusses (11) erfasst wird; und
Ausgeben eines Datenwiederherstellungsanforderungssignals an die portable Festplatte (20) über den reversiblen steckbaren Verbindunganschluss (11), wenn das spezifizierte Signal über einen zweiten Identifikationsstift (112a) einer Vielzahl von unteren Stiften (112) des reversiblen steckbaren Verbindunganschlusses (11) erfasst wird.

15. Datenübertragungsverfahren nach Anspruch 14, das ferner umfasst:
Empfangen von Verifikationsinformationen über den reversiblen steckbaren Verbindunganschluss (11); und
Bestätigen, dass die Verifikationsinformationen mit den vorgespeicherten Informationen übereinstimmen, vor der Ausgabe der gespeicherten Daten oder des Datenwiederherstellungsanforderungssignals.

## Revendications

1. Dispositif de transmission de données (10) comprenant :
un port de connexion réversible enfichable (11) comprenant une pluralité de broches supérieures (111) et une pluralité de broches inférieures (112) agencées de façon opposée, la pluralité de broches supérieures (111) comportant une première broche d'identification (111a) et la pluralité de broches inférieures (112) comportant une deuxième broche d'identification (112a) ;
une mémoire (12) ; et
un processeur (13) connecté au port de connexion réversible enfichable (11) et à la mémoire (12) et
**caractérisé en ce que** le processeur (13) est configuré pour fournir des données enregistrées dans la mémoire (12) par le port de connexion réversible enfichable (11) lorsqu'un signal spécifié est détecté par la première broche d'identification (111a), et pour fournir un signal de demande de restauration de données par le port de connexion réversible enfichable (11), lorsque le signal spécifié est détecté par la deuxième broche d'identification (112a).

2. Dispositif de transmission de données (10) selon la revendication 1, la première broche d'identification (111a) étant disposée à une séquence spécifique de gauche à droite de la pluralité de broches supérieures (111) et la deuxième broche d'identification (112a) étant disposée à une séquence spécifique de gauche à droite de la pluralité de broches inférieures (112).

3. Dispositif de transmission de données (10) selon la revendication 1, le processeur (13) étant configuré en outre pour recevoir des informations de vérification par le port de connexion réversible enfichable (11) et pour confirmer que les informations de vérification vont avec des informations pré-enregistrées avant de fournir les données enregistrées dans la mémoire (12) ou le signal de demande de restauration de données.

4. Dispositif de transmission de données (10) selon la revendication 1, le processeur (13) étant configuré en outre pour recevoir un programme de fonctionnement par le port de connexion réversible enfichable (11) et pour installer le programme.

5. Dispositif de transmission de données (10) selon la revendication 4, le processeur (13) étant configuré pour activer le programme de fonctionnement lorsque le signal spécifié est détecté par la première broche d'identification (111a) ou par la deuxième broche d'identification (112a) et pour fournir les données enregistrées dans la mémoire (12) ou le signal de demande de restauration de données par le port de connexion réversible enfichable (11) après avoir activé le programme de fonctionnement.

6. Dispositif de transmission de données (10) selon la revendication 1, comprenant en outre une interface d'utilisateur (14) connectée au processeur (13), le processeur (13) étant configuré en outre pour envoyer un message de confirmation par l'interface d'utilisateur lorsque le signal spécifié est détecté par la première broche d'identification (111a) ou la deuxième broche d'identification (112a).

7. Système de transfert de données (1), comprenant :
un disque dur portable (20) et
le dispositif de transfert de données (10) selon la revendication 1,
le port de connexion réversible enfichable (11) étant configuré pour être connecté au disque dur portable (20), le processeur (13) étant configuré pour fournir les données enregistrées dans la mémoire (12) au disque dur portable (20) lorsque le signal spécifié du disque dur portable (20) est détecté par la première broche d'identification (111a), et pour fournir le signal de demande de restauration de données au disque dur portable (20) lorsque le signal spécifié est détecté par la deuxième broche d'identification (112a).

8. Système de transfert de données (1) selon la revendication 7, le disque dur portable (20) ayant une face avant et une face arrière et étant configuré pour sauvegarder des données d'un premier dispositif lorsqu'il est connecté au premier dispositif par la face avant et pour restaurer les données qui sont sauvegardées à un deuxième dispositif lorsqu'il est connecté au deuxième dispositif par la face arrière, le premier dispositif et le deuxième dispositif étant le dispositif de transfert de données (10).

9. Système de transfert de données (1) selon la revendication 7, la première broche d'identification (111a) étant disposée à une séquence spécifique de gauche à droite de la pluralité de broches supérieures (111) et la deuxième broche d'identification (112a) étant disposée à une séquence spécifique de gauche à droite de la pluralité de broches inférieures (112).

10. Système de transfert de données (1) selon la revendication 7, le processeur (13) étant configuré en outre pour recevoir des informations de vérification par le port de connexion réversible enfichable (11) et pour confirmer que les informations de vérification vont avec des informations pré-enregistrées avant de fournir les données enregistrées dans la mémoire (12) ou le signal de demande de restauration de données.

11. Système de transfert de données (1) selon la revendication 7, le processeur (13) étant configuré en outre pour recevoir un programme de fonctionnement par le port de connexion réversible enfichable (11) et pour installer le programme.

12. Système de transfert de données (1) selon la revendication 7, le processeur (13) étant configuré pour activer le programme de fonctionnement lorsque le signal spécifié est détecté par la première broche d'identification (111a) ou par la deuxième broche d'identification (112a) et pour fournir les données enregistrées dans la mémoire (12) ou le signal de demande de restauration de données par le port de connexion réversible enfichable (11) après avoir activé le programme de fonctionnement.

13. Système de transfert de données (1) selon la revendication 7, le dispositif de transmission de données (10) comprenant en outre une interface d'utilisateur (14) connectée au processeur (13), le processeur (13) étant configuré en outre pour envoyer un message de confirmation par l'interface d'utilisateur lorsque le signal spécifié est détecté par la première broche d'identification (111a) ou la deuxième broche d'identification (112a).

14. Procédé de transfert de données pouvant être appliqué à un disque dur portable (20) et à un dispositif d transfert de données (10), le procédé de transfert de données étant **caractérisé par** le fait d'utiliser le dispositif de transfert de données (10) pour effectuer :
fournir des données enregistrées au disque dur portable (20) par un port de connexion réversible enfichable (11) lorsqu'un signal spécifié est détecté par une première broche d'identification (111a) d'une pluralité de broches supérieures du port de connexion réversible enfichable (11), et
fournir un signal de demande de restauration de données au disque dur portable (20) par le port de connexion réversible enfichable (11), lorsque le signal spécifié est détecté par une deuxième broche d'identification (112a) d'une pluralité de broches inférieures (112) du port de connexion réversible enfichable (11).

15. Procédé de transfert de données selon la revendication 14, comprenant en outre :
recevoir des informations de vérification par le port de connexion réversible enfichable (11) et
confirmer que les informations de vérification vont avec des informations pré-enregistrées avant de fournir les données enregistrées ou le signal de demande de restauration de données.
